# EUROPÄISCHE PATENTSCHRIFT

(11) **EP 1 529 667 B1**
(45) Veröffentlichungstag und Bekanntmachung des Hinweises auf die Patenterteilung: **29.03.2006**
(21) Anmeldenummer: 03025220.9
(22) Anmeldetag: 05.11.2003
(51) Int. Cl.: B60D 1/06, B60D 1/42

(54) **Kugelkupplung**
Ball and socket hitch
Attelage à boule

(43) Veröffentlichungstag der Anmeldung: 11.05.2005
(73) Patentinhaber: Cramer Kupplung GmbH & Co. KG, 45356 Essen (DE)
(72) Erfinder: Steiner, Peter, 45721 Haltern (DE); Staude, Rudolf, Dr.-Ing., 42111 Wuppertal (DE)
(74) Vertreter: Albrecht, Rainer Harald

(56) Entgegenhaltungen:
- WO-A-01/32451
- WO-A-89/04260
- DE-A- 10 117 656
- US-A- 5 853 187
- US-A1- 2003 052 472

## Beschreibung

Die Erfindung betrifft eine Anhängekupplung für Zugfahrzeuge - wie sie beispielsweise in der Land- und Forstwirtschaft eingesetzt werden - mit einem an ein Zugfahrzeug anschließbaren bzw. angeschlossenen Kupplungsträger und einem in dem Kupplungsträger um eine in Zugrichtung verlaufende Drehachse drehbar gelagerten Kugelträger mit einer Kupplungskugel für eine an einen Anhänger anschließbare bzw. angeschlossene Kugelkalotte und einem Niederhalter für die die Kupplungskugel im Kupplungszustand übergreifende Kugelkalotte, die auch als Zugkugel bezeichnet wird.

Es ist eine derartige Anhängekupplung bekannt, bei welcher die Kugelkalotte als Adapter ausgebildet ist, um eine einfache Anpassung an verschiedene Anhänger ohne aufwändige Umrüstarbeiten zu erreichen (vgl. EP 1 236 590 A1, US 2003/052472, WO 01/32451). Diese Ausführungsform hat sich an sich bewährt und ermöglicht verschiedene Schwenkwinkel um die Längsachse/Querachse und Hochachse der gleichsam Kugelkopfkupplung. - Hier setzt die Erfindung ein.

Der Erfindung liegt das technische Problem zugrunde eine Anhängekupplung der eingangs beschriebenen Ausführungsform zu schaffen, bei welcher der Zugangriffspunkt für die Kugelkalotte auch beim Verdrehen der ziehenden bzw. gezogenen Kugelkalotte unter jeden beliebigen Schwenkwinkel erhalten bleibt.

Dieses Problem löst die Erfindung bei einer gattungsgemäßen Anhängekupplung dadurch, dass die Drehachse des Kugelträgers durch den Kugelmittelpunkt der Kupplungskugel verläuft. In diesem Zusammenhang lehrt die Erfindung weiter, dass der Kugelträger mit einem in Zugrichtung verlaufenden Drehzapfen in dem Kupplungsträger gelagert ist und die Mittenachse des Drehzapfens die durch den Kugelmittelpunkt verlaufende Drehachse bildet. - Diese Maßnahmen der Erfindung haben zur Folge, dass der Zugangriffspunkt für die Kugelkalotte auch beim Verdrehen der ziehenden bzw. gezogenen Kugelkalotte unter jedem beliebigen Schwenkwinkel erhalten bleibt. Tatsächlich wird durch die erfindungsgemäßen Maßnahmen im Gegensatz zu sonst drehbar gelagerten Kugelkalotten erreicht, dass eine relativ große Stützlast über den Schaft der nicht länger drehbar gelagerten Kugelkalotte übertragen werden kann, wobei also die Kugelkalotte über einen drehfesten Schaft an dem Anhänger befestigt ist. Dadurch lässt sich ein sehr viel dickerer bzw. stärkerer Schaft für die Kugelkalotte als bei einer drehbar gelagerten Ausführungsform verwirklichen.

Weitere erfindungswesentliche Maßnahmen sind im Folgenden aufgeführt. So kann dem Drehzapfen eine einstellbare Drehsicherung zugeordnet sein, z. B. auf 100 kpm. Diese Drehsicherung wird beim Verdrehen der Kugelkalotte wirksam, wenn der Rand der Kugelkalotte auf eine die Kupplungskugel fußseitig umgebende Flanke drückt. Tatsächlich wird durch die Drehsicherung sicher gestellt, dass die Fahrzeugverbindung beim Umstürzen des Fahrzeuges bzw. des Anhängers erhalten bleibt. Vorzugsweise weist der Kugelträger auf seiner der Kupplungskugel zugeordneten Breitseite eine maulartige Zentrierfläche für die Kugelkalotte auf, die Freiheitsgrade in sämtlichen Richtungen hat und dennoch eine Zentrierung im Bereich der Zentrierfläche erfährt, über welcher sich der seitlich ausschwenkbare Niederhalter befindet. - Ferner kann der erfindungsgemäße zentrale und einteilige Kugelträger unschwer in beliebigen Kupplungsträgern montiert werden und ist damit für höhenverstellbare Flanschplatten ebenso wie für Befestigungsflansche geeignet.

Im Folgenden wird die Erfindung anhand einer lediglich ein Ausführungsbeispiel darstellenden Zeichnung näher erläutert. Es zeigen:

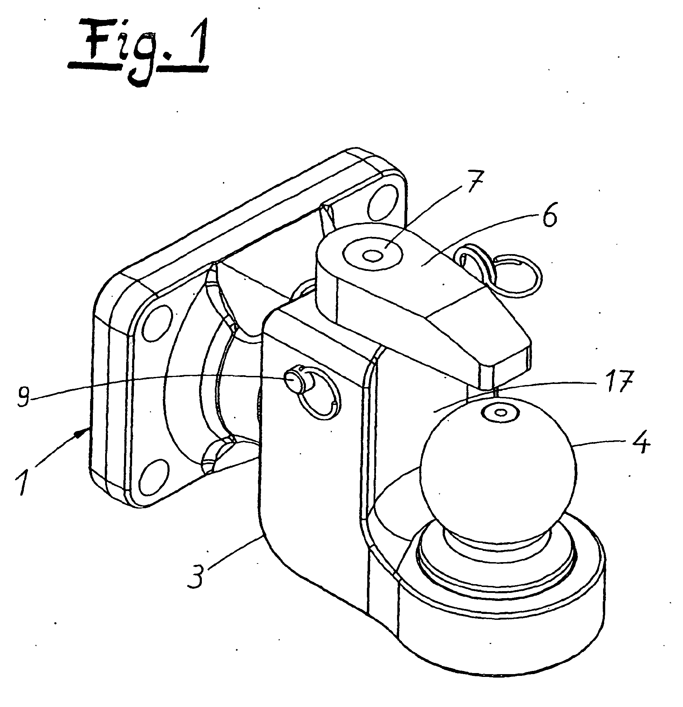

- Fig. 1: einen Kupplungsträger in Flanschausführung mit einem Kugelträger und Niederhalter in perspektivischer Darstellung,

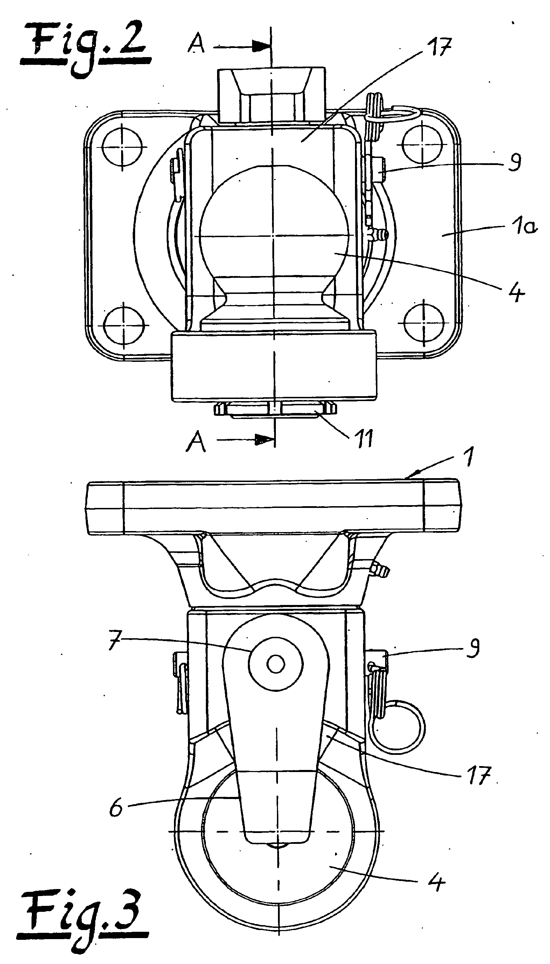

- Fig. 2: den Gegenstand nach Fig. 1 in Frontansicht,
- Fig. 3: den Gegenstand nach Fig. 2 in Draufsicht,

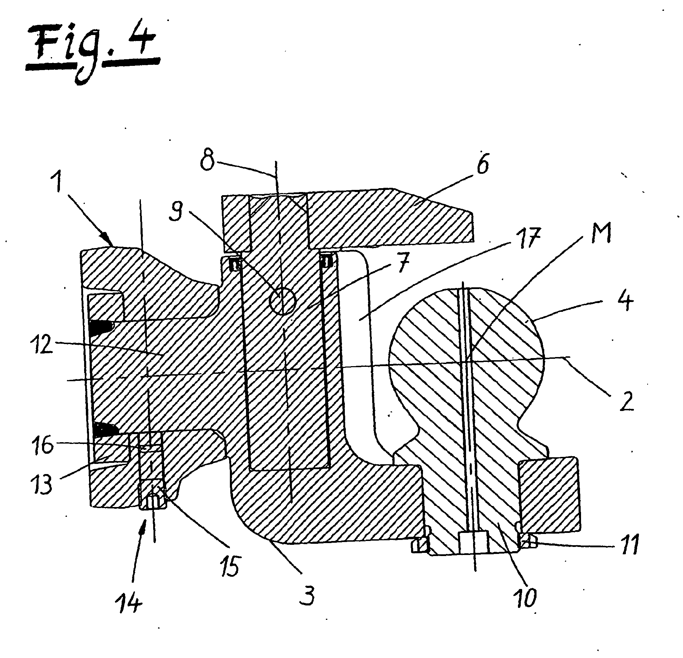

- Fig. 4: einen Schnitt AA durch den Gegenstand nach Fig. 2 und

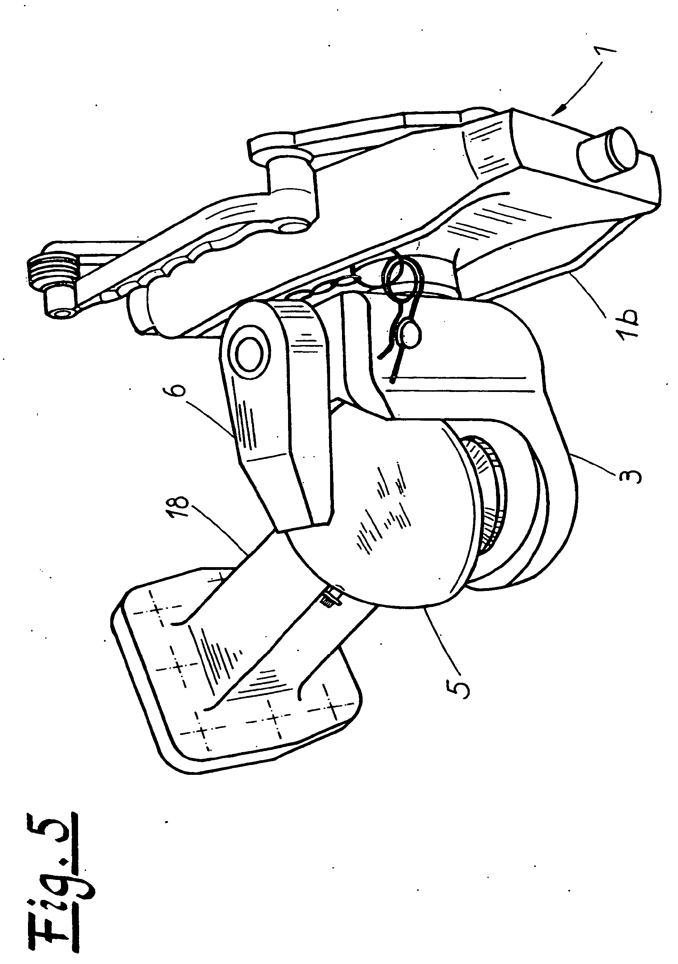

- Fig. 5: eine abgewandelte Ausführungsform des Gegenstandes nach Fig. 1 mit Kugelkalotte in perspektivischer Darstellung.

In den Figuren ist eine Anhängekupplung für Zugfahrzeuge wie insbesondere Fahrzeuge der Land- und Forstwirtschaft dargestellt. Diese Anhängekupplung weist einen an ein Zugfahrzeug anschließbaren Kupplungsträger 1 und einen in dem Kupplungsträger 1 um eine in Zugrichtung verlaufende Drehachse 2 drehbar gelagerten Kugelträger 3 mit einer Kupplungskugel 4 für eine an einen Anhänger anschließbare Kugelkalotte 5 auf. Ferner ist ein Niederhalter 6 für die die Kupplungskugel 4 im Kupplungszustand übergreifende Kugelkalotte 5 vorgesehen. Dieser Niederhalter 6 ist in dem Kugelträger 3 mittels eines Lagerzapfens, 7 um eine Vertikalachse 8 schwenkbar gelagert und mittels eines den Kugelträger 3 und den Lagerzapfen 7 quer durchdringenden und ziehbaren Verriegelungsbolzens 9 in Niederhalteposition verriegelbar. Die Kupplungskugel 4 ist mittels eines Lagerzapfens 10 in dem Kugelträger 3 austauschbar gelagert und mittels einer Nutmutter 11 auf der Unterseite des Kugelträgers 3 gesichert. Die Drehachse 2 des Kugelträgers verläuft durch den Kugelmittelpunkt M der Kupplungskugel 4, so dass gleichsam ein zentraler Kugelträger 3 verwirklicht wird. Dazu ist der Kugelträger 3 mit einem in Zugrichtung verlaufenden Drehzapfen 12 in dem Kupplungsträger 1 gelagert, wobei die Mittenachse des Drehzapfens 12 die durch den Kugelmittelpunkt M verlaufende Drehachse 2 bildet. Auf der Rückseite des Kupplungsträgers 1 ist zur Sicherung des Kugelträgers 3 ein Lagerring 13 auf den Drehzapfen 12 aufgeschweißt. Dem Drehzapfen 12 ist eine einstellbare Drehsicherung 14 zugeordnet. Bei dieser Drehsicherung 14 handelt es sich in einfacher Ausführungsform um eine Stellschraube 15, die auf ein dem Drehzapfen 12 zugeordnetes Federelement 16 arbeitet.

Der Kugelträger 3 weist auf seiner der Kupplungskugel 4 zugeordneten Breitseite eine maulartige Zentrierfläche 17 für die Kugelkalotte 5 auf, die mittels eines drehfesten Schaftes 18 an einem Anhänger befestigt werden kann. - Der Kupplungsträger 1 kann als Befestigungsflansch 1a oder höhenverstellbare Flanschplatte 1b ausgebildet sein.

## Patentansprüche

1. Anhängekupplung für Zugfahrzeuge mit einem an ein Zugfahrzeug anschließbaren Kupplungsträger (1) und einem in dem Kupplungsträger (1) um eine in Zugrichtung verlaufende Drehachse (2) drehbar gelagerten Kugelträger (3) mit einer Kupplungskugel (4) für eine an einen Anhänger anschließbare Kugelkalotte (5) und einem Niederhalter (6) für die die Kupplungskugel (4) im Kupplungszustand übergreifende Kugelkalotte (5), **dadurch gekennzeichnet, dass** die Drehachse (2) des Kugelträgers (3) durch den Kugelmittelpunkt (M) der Kupplungskugel (4) verläuft.

2. Anhängekupplung nach Anspruch 1, **dadurch gekennzeichnet, dass** der Kugelträger (3) mit einem in Zugrichtung verlaufenden Drehzapfen (12) in dem Kupplungsträger (1) gelagert ist und die Mittenachse des Drehzapfens (12) die durch den Kugelmittelpunkt (M) verlaufende Drehachse (2) bildet.

3. Anhängekupplung nach Anspruch 1 oder 2, **dadurch gekennzeichnet, dass** dem Drehzapfen (12) eine einstellbare Verdrehsicherung (14) zugeordnet ist.

4. Anhängekupplung nach einem der Ansprüche 1 bis 3, **dadurch gekennzeichnet, dass** der Kugelträger (3) auf seiner der Kupplungskugel (4) zugeordneten Breitseiten eine maulartige Zentrierfläche (17) für die Kugelkalotte (5) aufweist.

5. Anhängekupplung nach einem der Ansprüche 1 bis 4, **dadurch gekennzeichnet, dass** die Kugelkalotte (5) über einen drehfesten Schaft (18) an einem Anhänger befestigbar ist.

6. Anhängekupplung nach einem der Ansprüche 1 bis 5, **dadurch gekennzeichnet, dass** der Kupplungsträger (1) als Befestigungsflansch (1a) oder höhenverstellbare Flanschplatte (1b) ausgebildet ist.

## Claims

1. A trailer hitch for tractors with a hitch bracket (1) that can be connected to a tractor and a ball bracket (3) with a hitch ball (4) for a spherical cap (5) that can be connected to a trailer, wherein said ball bracket is supported in the hitch bracket (1) such that it can be turned about an axis of rotation (2) extending in the direction of traction, and with a hold-down device (6) for the spherical cap (5) engaging over the hitch ball (4) in the coupled state, **characterized in that** the axis of rotation (2) of the ball bracket (3) extends through the center (M) of the hitch ball (4).

2. The trailer hitch according to Claim 1, **characterized in that** the ball bracket (3) is supported in the hitch bracket (1) with a pivot (12) extending in the direction of traction, and **in that** the center line of the pivot (12) forms the axis of rotation (2) extending through the center (M) of the ball.

3. The trailer hitch according to Claim 1 or 2, **characterized in that** an adjustable rotary lock (14) is assigned to the pivot (12).

4. The trailer hitch according to one of Claims 1-3, **characterized in that** the ball bracket (3) has a mouth-like centering surface (17) for the spherical cap (5) on its broadsides assigned to the hitch ball (4).

5. The trailer hitch according to one of Claims 1-4, **characterized in that** the spherical cap (5) can be mounted on a trailer by means of a non-rotatable shaft (18).

6. The trailer hitch according to one of Claims 1-5, **characterized in that** the hitch bracket (1) is realized in the form of a mounting flange (1a) or a height-adjustable flange plate (1b).

## Revendications

1. Système d'attelage pour véhicules de traction, comprenant un support d'attelage (1) raccordable à un véhicule de traction et un support de boule (3) s'appuyant en rotation dans le support d'attelage (1) autour d'un axe de rotation (2) s'étendant dans le sens de traction et comportant une boule d'attelage (4) pour une calotte de boule (5) raccordable à une remorque et un serre-flan (6) pour la calotte de boule (5) empiétant sur la boule d'attelage (4) en état d'attelage (5), **caractérisé en ce que** l'axe de rotation (2) du support de boule (3) traverse le point central de boule (M) de la boule d'attelage (4).

2. Système d'attelage selon la revendication 1, **caractérisé en ce que** le support de boule (3) s'appuie par un tourillon (12) dans le support d'attelage (1) et que l'axe central du tourillon (12) constitue l'axe de rotation (2) traversant le point central de la boule (M).

3. Système d'attelage selon la revendication 1 ou 2, **caractérisé en ce qu'**au tourillon (12) est associé un système anti-torsion (14) réglable.

4. Système d'attelage selon une des revendications 1 à 3, **caractérisé en ce que** le support de boule (3) présente, sur ses côtés larges associés à la boule d'attelage (4), une surface de centrage (17) en forme de gueule pour la calotte de boule (5).

5. Système d'attelage selon une des revendications 1 à 4, **caractérisé en ce que** la calotte de boule (5) peut être fixée par une tige fixe en rotation (18) à une remorque.

6. Système d'attelage selon une des revendications 1 à 5, **caractérisé en ce que** le support d'attelage (1) est réalisé sous forme d'une bride de fixation (1a) ou d'une plaque de bridage (1b) réglable en hauteur.
